# EUROPEAN PATENT APPLICATION

(11) **EP 1 647 875 A2**
(43) Date of publication of application: **19.04.2006**
(21) Application number: 05022450.0
(22) Date of filing: 14.10.2005
(51) Int. Cl.: G06F 1/16

(54) **Mobile terminal and display control method thereof**

(30) Priority: 15.10.2004 JP 2004301400
(71) Applicant: NEC CORPORATION, Tokyo (JP)
(72) Inventor: Tanaka, Motoshi, Minato-ku Tokyo (JP)
(74) Representative: Glawe, Delfs, Moll

(57) **Abstract**

A mobile terminal in which the user can manipulate the pointer easily without keystrokes or any pointing device. When the select button of an input unit is depressed, a tilt sensor provided with an accelerometer detects the tilt of a mobile terminal from a reference angle. Based on the tilt of the mobile terminal, a processor calculates the moving direction and speed of the pointer to move the pointer on a display. If the degree of the tilt increases, the pointer movement is accelerated. On the other hand, if the degree of the tilt decreases, the pointer movement is deaccelerated. When the pointer reaches an activate button to activate a desired application program, the pointer movement stops by returning the tilt of the mobile terminal to the reference angle. Upon release of the button, the application program is executed. That is, the pointer movement on the display screed can be controlled in such a manner that a marble is rolled on a plate according to the degree of the tilt of the plate.

## Description

### FIELD OF THE INVENTION

The present invention relates to a pointing system for a mobile terminal such as a mobile phone or a personal digital assistant (PDA), and more particularly, to a pointing system which senses the degree of tilt of a mobile terminal, thus enabling pointer manipulation on a display.

### BACKGROUND OF THE INVENTION

In recent years, with the widespread use of mobile terminals such as mobile phones, the tendency has been to put more emphasis on operationality or operability for users at product development to differentiate products. Pointing devices are known as means of inputting information by a simple operation without keystrokes. When using a mobile terminal with a pointing device such as a mouse or a light pen, the user have to hold the mobile terminal with one hand and operate the pointing device with the other. As such, both his/ her hands are tied up, which impairs the usability of the mobile terminal.

There are pointing devices which allow the user to manipulate the pointer on a display screen with a single hand. Examples of the pointing devices include a touch panel, a trackball, a trackpoint, and a trackpad. Differently from notebook or laptop computers, the mobile terminal is characterized by the small size and compactness such that the user can hold it one-handed. Consequently, the display, keys, buttons, etc. are necessitated to be miniaturized. The mobile phone, especially, has a smaller body, and therefore, the size of its display is too small for user's fingers to touch-input. Besides, in order to provide the mobile terminal with a pointing device such as a trackball, a trackpoint or a trackpad, the pointing device needs reduction in size to suit the size of the mobile terminal. Thus, the user operability of the mobile terminal is deteriorated.

Taking full advantage of the small size of the mobile terminal, the pointer may be manipulated by the movement of the terminal itself. To this end, techniques have been proposed in which the pointer moves according to the degree of the tilt of the mobile terminal to allow the user to manipulate the pointer without a pointing device as for example a touch panel, a trackball or a trackpoint. In Japanese Patent Application laid open No. 2002-082773 (pp. 3 - 6, Fig. 1), there is found an example of such conventional techniques. According to the conventional technique, when a mobile terminal is rotated, the rotation is detected to move a cursor on a display screen. The mobile terminal comprises a 3D (three-dimensional) vibration gyro sensor, a CPU (Central Processing Unit), a display and an operation key. While the operation key is being depressed, the CPU controls the position of the cursor on the display screen based on a rotation angle output from the 3D vibration gyro sensor. The vibration gyro uses the principle of mechanics that when a rotational angular velocity is applied to a vibrator, Coriolis force is developed in a direction perpendicular to the direction of vibration. The stress generated in the vibrator by the Coriolis force is converted to a voltage through the piezoelectric effect. The voltage value is proportional to the applied rotational angular velocity. The angular velocity is detected and time-integrated by an electric circuit mounted in the sensor with the vibration gyro. Thereby, the angular velocity is converted to a rotation angle to be output.

In the conventional mobile terminal, the position of the cursor or pointer on the display screen changes relative to the rotation angle of the terminal body. When the user stops rotating the mobile terminal and the tilt angle of the body is unchanged, the pointer becomes stationary on the display screen.

If the pointer is provided with a variety of movement characteristics and moves as if a marble rolling on a plate according to, for example, the degree of the tilt of the terminal or display, the operability (human interface) can be imploded. Further, it is possible that the pointer has a much broader range of applications and may be applied to software games or the like. However, such movement cannot be realized by the conventional techniques.

### SUMMARY OF THE INVENTION

It is therefore an object of the present invention to improve the method in which a user moves his/ her mobile terminal itself to manipulate the movement of the pointer according to the degree of the tilt of the terminal, thus providing a display control method capable of diversifying the movement of a pointer on a display screen and a mobile terminal performing the method.

In accordance with the first aspect of the present invention, to achieve the object mentioned above, there is provided a mobile terminal comprising a tilt sensor for detecting the tilt of the mobile terminal and a controller for controlling the moving speed or velocity of a pointer on the display screen of the mobile terminal toward the direction of the tilt according to the degree of the tilt.

In accordance with the second aspect of the present invention, there is provided a mobile terminal comprising a tilt sensor for detecting the tilt of the mobile terminal and a controller for changing the moving speed of a pointer on the display screen of the mobile terminal when the tilt sensor has detected a change in the tilt of the mobile terminal.

In accordance with the third aspect of the present invention, there is provided a mobile terminal comprising a tilt sensor for detecting the tilt of the mobile terminal and a controller for changing the moving speed or the moving position of a pointer on the display screen of the mobile terminal toward the direction of the tilt when the tilt sensor has detected a change in the tilt of the mobile terminal.

In accordance with the fourth aspect of the present invention, there is provided a display control method applied to a mobile terminal comprising the steps of detecting the tilt of the mobile terminal and controlling the moving speed of a pointer on the display screen of the mobile terminal toward the direction of the tilt according to the degree of the tilt.

In accordance with the fifth aspect of the present invention, there is provided a display control method applied to a mobile terminal comprising the steps of detecting the tilt of the mobile terminal and changing the moving speed of a pointer on the display screen of the mobile terminal when a change in the tilt of the mobile terminal has been detected.

In accordance with the sixth aspect of the present invention, there is provided a display control method applied to a mobile terminal having a display and a tilt sensor, the method comprising the steps of detecting the tilt of the mobile terminal and changing the moving speed or the moving position of a pointer displayed on the screen of the display toward the direction of the tilt when the tilt sensor has detected a change in the tilt of the mobile terminal.

The moving speed or the moving position may be calculated based on the output of the tilt sensor corresponding to the tilt from the horizontal.

The moving speed or the moving position may be calculated based on the comparison between the output data of the tilt sensor at a predetermined time point as a reference and that when the tilt sensor detects a change in the tilt of the mobile terminal.

The tilt sensor may be an absolute tilt sensor.

The tilt sensor may be an incremental tilt sensor.

In accordance with the seventh aspect of the present invention, there is provided a display control method applied to a mobile terminal having a display and a tilt sensor, the method comprising the steps of displaying icons each corresponding to a specific operation including specific application software on the screen of the display, displaying a pointer on the screen of the display, changing the moving speed or the moving position of the pointer toward the direction of the tilt when the tilt sensor has detected a change in the tilt of the mobile terminal, when the pointer has moved to reside on the icon on the screen of the display, activating a specific operation including specific application software corresponding to the icon, and after the activation, deleting the icons from the screen of the display.

The mobile terminal may further have input keys. The pointer may be displayed on the screen of the display when a specific key of the input keys is depressed. The movement of the pointer may be controlled while the specific key is being depressed. On the other hand, a specific operation including specific application software may be activated when the specific key is released.

The display control method of the seventh aspect may further comprise the step of displaying a specific area on the edge of the screen of the display. When the pointer has moved to reside on the specific area on the screen of the display, the operation of the mobile terminal performing the display control method may be canceled.

As is described above, in accordance with the present invention, a mobile terminal comprises a tilt sensor for detecting the tilt of the mobile terminal and a controller for controlling the moving speed of a pointer on the display screen of the mobile terminal toward the direction of the tilt according to the degree of the tilt. Consequently, the movement of the pointer on the display screen is further diversified, and the operability of the mobile terminal can be improved.

### BRIEF DESCRIPTION OF THE DRAWINGS

The exemplary aspects and features of the present invention will become more apparent from the consideration of the following detailed description taken in conjunction with the accompanying drawings in which :
Fig. 1 is a block diagram showing the construction of a mobile terminal according to an embodiment of the present invention;
Fig. 2 is a diagram showing the construction of a triaxial accelerometer of the mobile terminal depicted in Fig. 1;
Fig. 3 is a diagram showing the tilt detection characteristics with respect to gravity of the triaxial accelerometer of the mobile terminal depicted in Fig. 1;
Fig. 4 is a diagram showing an example of the pointer manipulation of the mobile terminal depicted in Fig. 1;

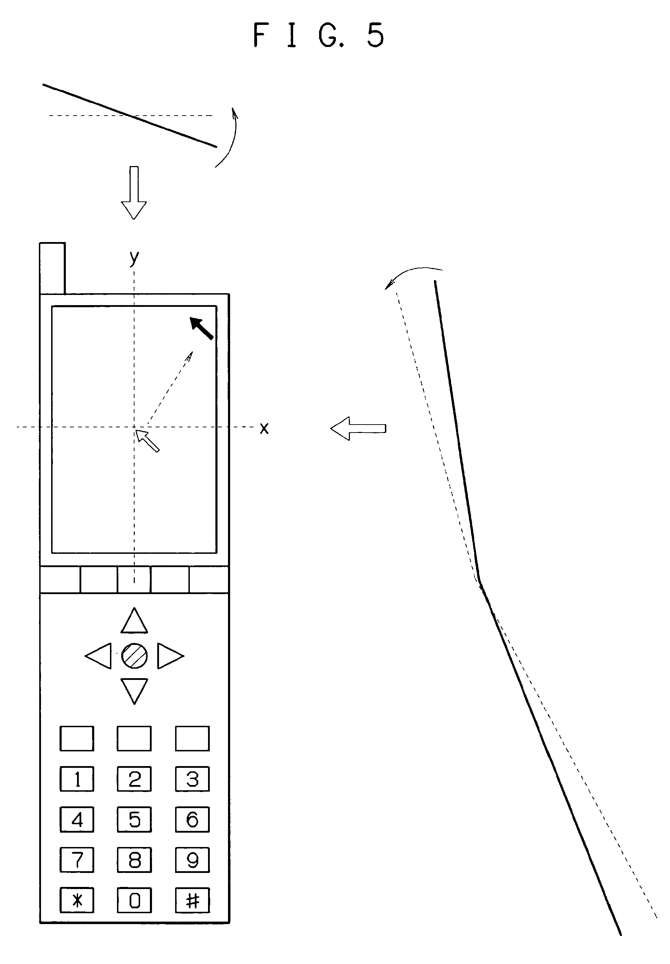

Fig. 5 is a diagram showing an example of the pointer manipulation of the mobile terminal depicted in Fig. 1;
Fig. 6 is a diagram showing an example of the pointer manipulation of the mobile terminal depicted in Fig. 1;
Fig. 7-A is a diagram showing an example of the pointer manipulation of the mobile terminal depicted in Fig. 1;
Fig. 7-B is a diagram showing an example of the pointer manipulation of the mobile terminal depicted in Fig. 1;
Fig. 8-A is a flowchart showing the operation of the mobile terminal depicted in Fig. 1;
Fig. 8-B is a flowchart showing the operation of the mobile terminal depicted in Fig. 1; and
Fig. 9 is a diagram showing an example of the pointer manipulation of the mobile terminal depicted in Fig. 1.

### DESCRIPTION OF THE PREFERRED EMBODIMENT

Referring now to the drawings, a description of a preferred embodiment of the present invention will be given in detail.

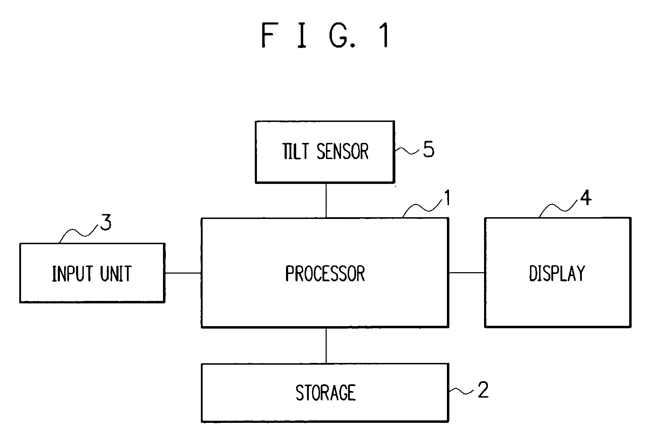

Fig. 1 is a block diagram showing the construction of a mobile terminal according to an embodiment of the present invention. Referring to Fig. 1, the mobile terminal comprises a processor 1, a storage 2, an input unit 3, a display 4, and a tilt sensor 5. The processor 1 controls all the components: the storage 2, the input unit 3, the display 4, and the tilt sensor 5. The input unit 3 includes keys, buttons, etc. by which the mobile terminal is provided with input. The tilt sensor 5 detects the tilt of the body of the mobile terminal.

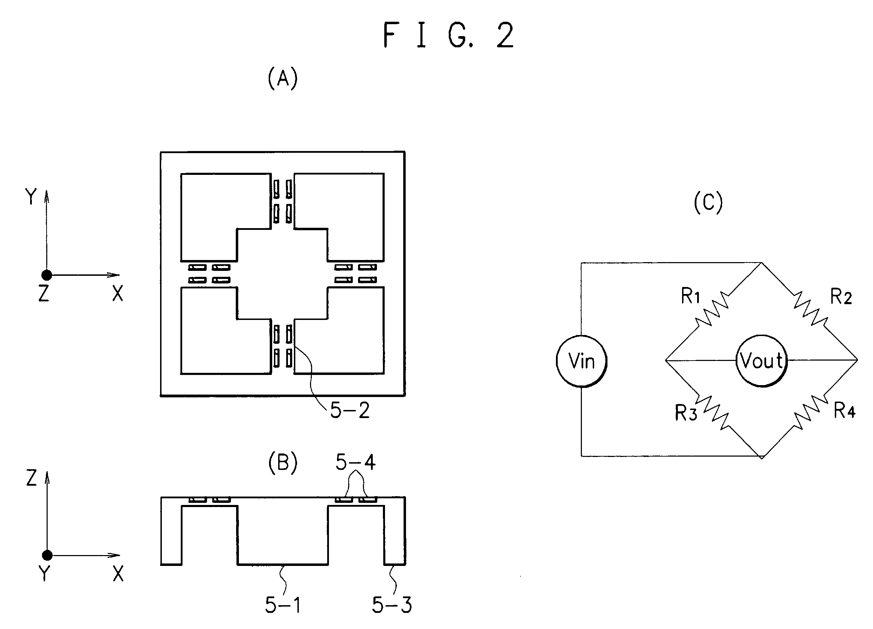

In this embodiment, a triaxial accelerometer is employed as the tilt sensor 5. Fig. 2 (A) shows the construction of the triaxial accelerometer in ground plan. Fig. 2 (B) shows the construction of the triaxial accelerometer in section. The triaxial accelerometer includes a mass 5-1, bridges 5-2, a frame 5-3, and piezoresistive elements 5-4 to have a movable structure. The bridges 5-2, each provided with the piezoresistive elements 5-4, support the mass 5-1. A silicon diaphragm is fabricated by etching to obtain the movable structure. When acceleration is applied in the X (or Y) direction to the mass 5-1 supported by the bridges 5-2, the accelerated mass 5-1 causes the deformation of the bridges 5-2 around the X- (or Y-) axis. Besides, acceleration in the Z direction causes the deflection of the bridges 5-2 along the Z-axis. The stress produced by the deformation or deflection results in changes in the resistance of each piezoresistive element 5-4 on the bridges 5-2. Wheatstone bridges are formed for use in measurement or detection circuits. As shown in Fig. 2 (C), each Wheatstone bridge consists of a combination of four piezoresistive elements 5-4 on the respective bridges 5-2 with the mass 5-1 therebetween, which are selected so that the stress can be detected most sensitively. With the electrical bridges, changes in the resistance of each piezoresistive element 5-4 can be extracted as a voltage change Vout.

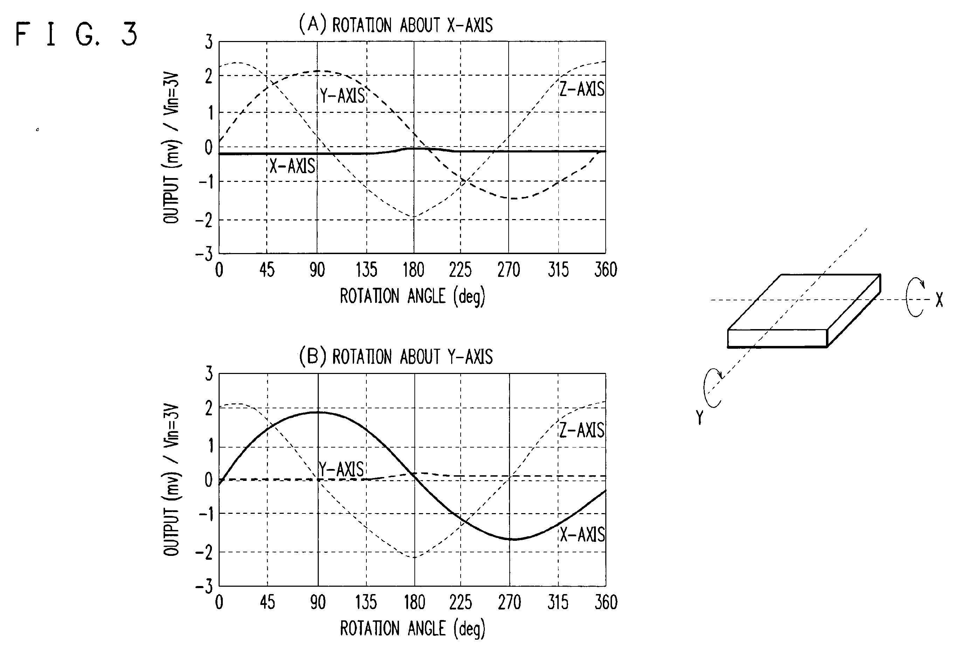

The piezoresistive accelerometer is capable of detecting static acceleration as, for example, "tilt relative to gravity". The piezoresistive accelerometer (absolute sensor) is substantially differs from the vibration gyro (incremental sensor) of the conventional technique in that the piezoresistive accelerometer can detect tilt with respect to an absolute reference: the direction of gravity, while the vibration gyro detects only relative angle changes. Fig. 3 (A) shows the output characteristics of the triaxial accelerometer rotated about the X-axis under gravity. Fig. 3 (B) shows the output characteristics of the triaxial accelerometer rotated about the Y-axis under gravity. When the triaxial accelerometer is rotated around the X-axis, as can be seen in Fig. 3 (A), the bridge circuits formed of the piezoresistive elements 5-4 on the bridges 5-2 on the Y-axis each provide the output that changes cosine-functionally with respect to angles. Because of the cosine-functional change, there are obtained the same level of outputs at angles of 45° and 135°. This, however, causes no problem since the angles range is ± 90° in the triaxial accelerometer of the present invention. The bridge circuits on the X-axis produce no output. When the triaxial accelerometer is rotated around the Y-axis, as can be seen in Fig. 3 (B), the bridge circuits on the Y-axis each provide the output that also changes cosine-functionally with respect to angles. These outputs can be extracted for the individual axes including the Z-axis.

A built-in A/D (Analog to Digital) converter converts the analog output from the bridge circuit to a digital signal, and outputs it to the processor 1 as a digital detection signal indicating the tilt of each axis.

The tilt sensor 5 is approximately 5 mm square with a thickness of 1.2 mm. That is, the size of the tilt sensor 5 is sufficiently small to be mounted on the circuit board of the small-size mobile terminal.

In the following, a description will be given of the exchange of information between the components of the mobile terminal depicted in Fig. 1.

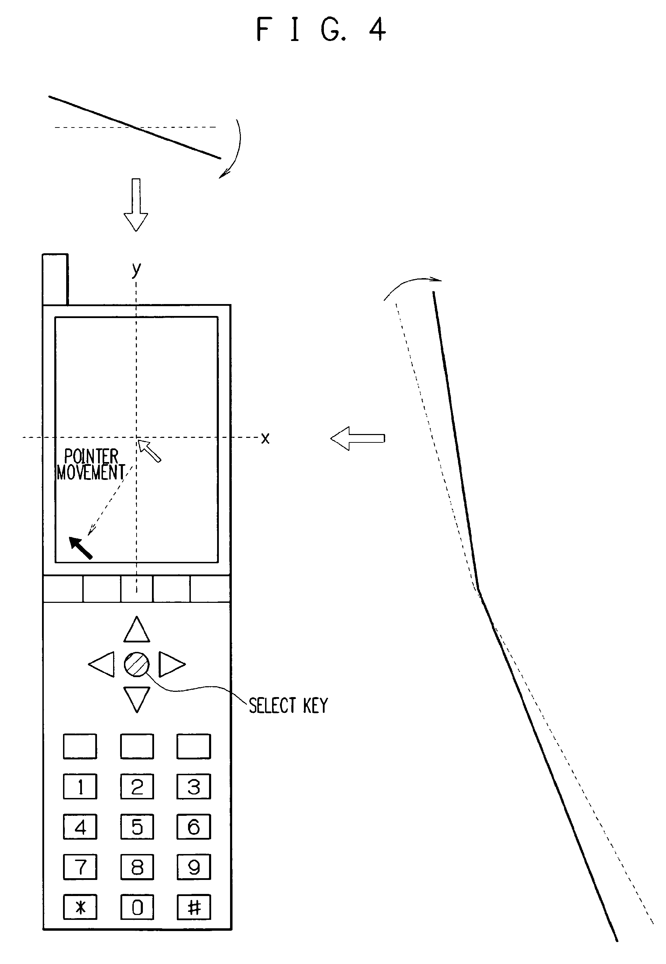

Fig. 4 shows the keys and buttons of the input unit 3. In Fig. 4, a button in the center of buttons to move the cursor up, down, left, and right is defined as "select key" (enter key or button).

Having detected the depression of the "select key" in the input unit 3, the processor 1 requests the tilt sensor 5 to detect the tilt of the mobile terminal. On receipt of the request, the tilt sensor 5 detects the initial tilt state of the mobile terminal to inform the processor 1 of data as to the degree of the tilt. The processor 1 stores the data received from the tilt sensor 5 in the storage 2 as "reference tilt data".

Thereafter, the processor 1 determines the display state or an application currently displayed on the display 4 to start displaying the pointer in response to the depression of the "select key". After determining the suitable position where the pointer is to be displayed, the processor 1 displays the pointer on the display 4.

Unless the processor 1 detects the release of the "select key" in the input unit 3, it regularly requests the tilt sensor 5 to detect the tilt of the mobile terminal.

The processor 1 uses pointer movement modes as follows:
(1) According to data as to the degree of tilt reported from time to time by the tilt sensor 5 and "reference tilt data" stored in the storage 2, the processor 1 calculates the moving position of the pointer by a preprogrammed arithmetic expression, and instructs the display 4 to update the pointer position in real time. This mode is also employed in the conventional techniques.
(2) According to data as to the degree of tilt newly reported by the tilt sensor 5 and "reference tilt data" stored in the storage 2, the processor 1 calculates a new pointer position in the same manner as described above. Further, the processor 1 obtains the speed of the pointer movement by time-differentiating the distance between the present and new positions. Based on the initial speed, the processor 1 instructs the display 4 on the pointer position in real time so that the pointer moves linearly at a constant rate of speed on the display screen. The constant speed of the movement is changed when the direction or degree of the tilt is changed while the "select key" is being depressed. If there is no change in the direction or degree of the tilt, pointer continues moving at the initial speed.

The processor 1 switches the pointer movement modes based on single or double click.

Having detected the release of the "select key" in the input unit 3, the processor 1 determines the present position of the pointer on the display 4 as well as the icon, etc. on which the pointer is residing. If the icon, etc. is selectable, the processor 1 activates an application corresponding to it.

After the activation, the processor 1 clears the "reference tilt data" stored in the storage 2, and removes the pointer from the display 4.

In the following, a description will be made of the relation between the motion of the user to tilt the mobile terminal and the movement of the pointer on the display screen. For the simplicity of the explanations given hereinafter, it will be assumed that the pointer moves at a constant speed unless there is a change in the direction and/ or degree of the tilt.

Fig. 4 shows the case of moving a pointer on the display screen of, for example, a mobile phone to the lower left corner. Fig. 4 shows the case of moving a pointer on the display screen to the upper right corner.

When moving the pointer in the lower left direction, the user tilts the body of the mobile terminal to the lower left. On the other hand, the user tilts the body of the mobile terminal to the upper right to move the pointer in the upper right direction.

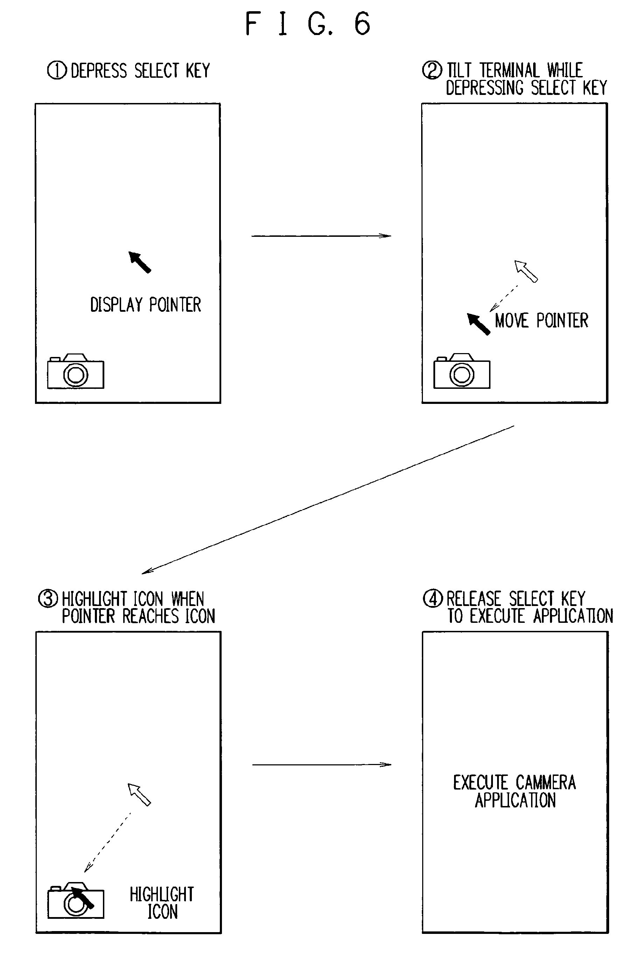

Fig. 6 shows screen images when the pointer is displayed and moved, and subsequently, a function or an application indicated by the pointer is executed.

Upon depression of the "select key" of the mobile terminal by the user, the pointer is displayed on the screen. In order to move the pointer, the user tilts the body of the mobile terminal in the direction in which it is desired to move the pointer while depressing the "select key". At the time the pointer moves over an icon to be selected, the user releases the "select key".

Thereby, the function or application corresponding to the icon indicated by the pointer is executed.

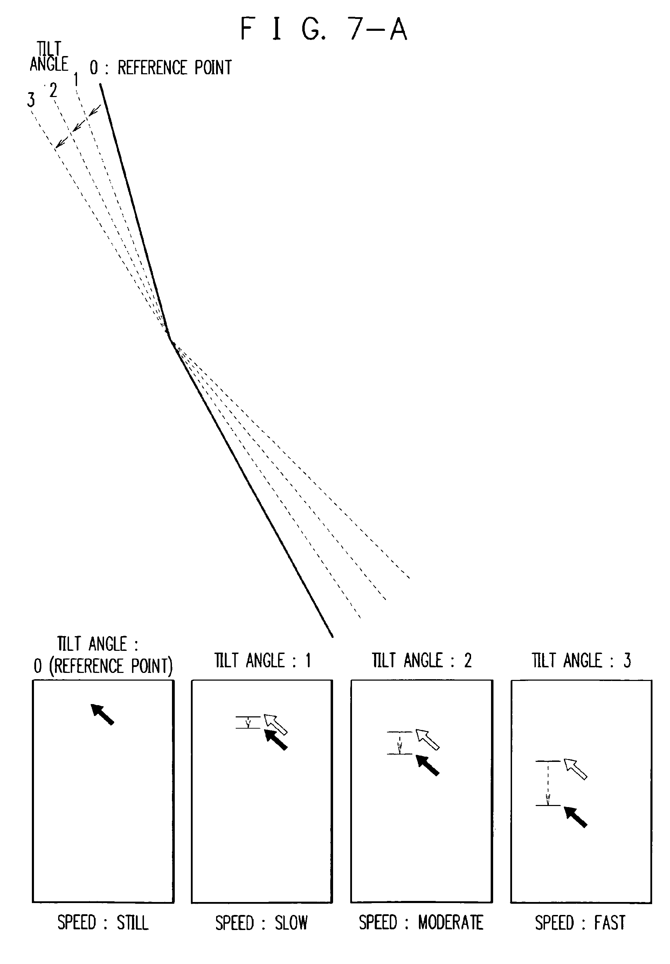

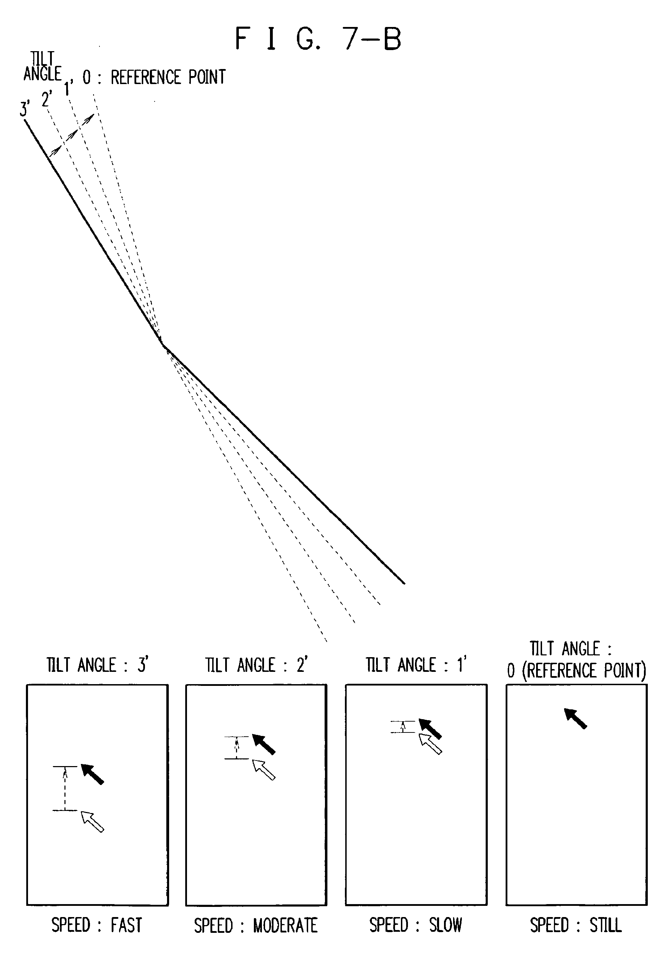

Fig. 7 shows the moving speeds of the pointer according to the degree of the tilt of the mobile terminal.

As can be seen in Fig. 7-A, the moving speed of the pointer can be changed according to the degree of the tilt of the mobile terminal. When the mobile terminal is substantially tilted from a reference point, the pointer moves quickly. Meanwhile, when the mobile terminal is slightly tilted from a reference point, the pointer moves slowly. Besides, as can be seen in Fig. 7-B, when the tilt of the mobile terminal is returned to the initial state or the reference point, the movement of the pointer is terminated.

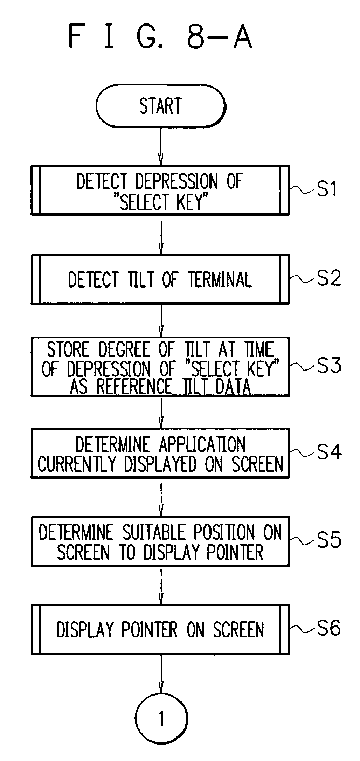

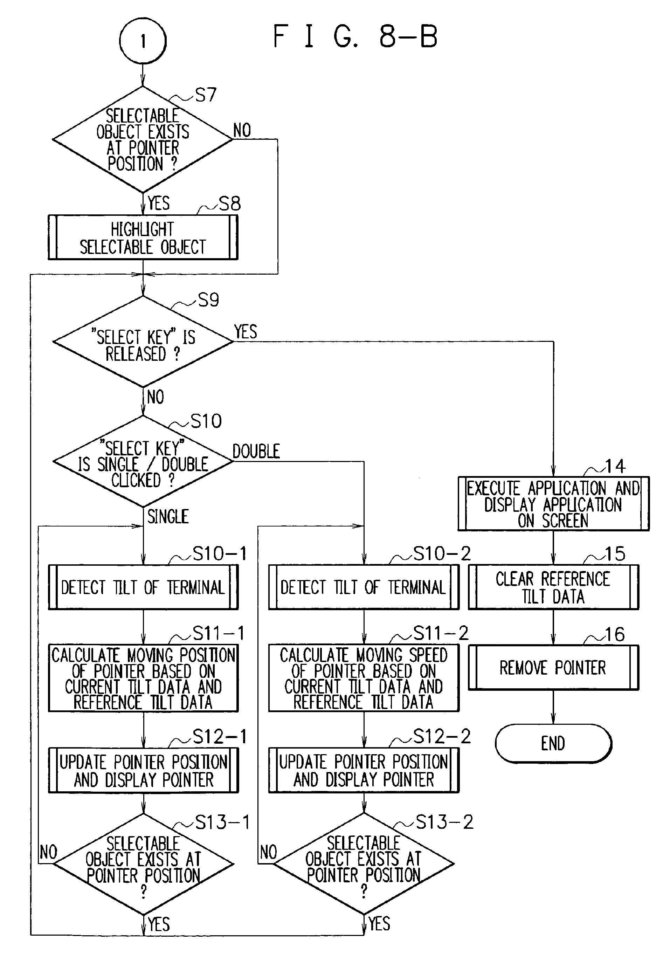

Figs. 8-A and Fig. 8-B are flowcharts showing an example of the operation of the mobile terminal from when the user depresses the "select key" to when he/ she releases it. Referring to Figs. 8-A and Fig. 8-B, a description will be given of the operation of the mobile terminal according to the embodiment.

Fig. 8-A shows the process from the depression of the "select key" to the display of the pointer on the display screen.

First, the user who holds the mobile terminal one-handed depresses the "select key" in the input unit 3 of the mobile terminal. The processor 1 detects the depression of the "select key" (step S1).

Then, the tilt sensor 5 built in the mobile terminal detects the tilt of the body of the mobile terminal at present (step S2). The tilt sensor 5 informs the processor 1 of data as to the degree of the tilt at the time of the depression of the "select key".

The processor 1 stores the data received from the tilt sensor 5 in the storage 2 as "reference tilt data" (step S3).

After that, the processor 1 determines an application currently displayed on the display 4 to display the pointer (step S4).

According to the application, the processor 1 determines the suitable position on the screen where the pointer is to be displayed (step S5).

Thus, the processor 1 displays the pointer on the display 4 (step S6).

Fig. 8-B shows the process after the display of the pointer on the display screen, such as moving the pointer, until the release of the "select key".

After the pointer is displayed on the display screen, the processor 1 determines whether or not there is a selectable object (icon, anchor, etc.) at the position where the pointer is residing (step S7).

If there is a selectable object (step S7, YES), the processor 1 highlights the selectable object to inform the user that the object is selectable (step S8). If not, the processor 1 does not change the display on the screen.

Subsequently, the processor 1 determines whether or not the user releases the "select key" to select the object (step S9).

If the "select key" is not released (step S9, NO), the processor 1 determines the pointer movement mode.

When the user clicks the "select key" once (step S10, SINGLE), the tilt sensor 5 detects the tilt of the body of the mobile terminal (step S10-1). The tilt sensor 5 informs the processor 1 of current data as to the degree of the tilt.

According to the current data reported by the tilt sensor 5 and "reference tilt data" stored in the storage 2, the processor 1 calculates the moving position of the pointer (step S11-1).

The processor 1 updates the pointer position on the display 4, thereby displaying the pointer at the updated position (step S12-1).

After the pointer is displayed on the screen, the processor 1 determines whether or not there is a selectable object (icon, anchor, etc.) at the updated pointer position (step S13-1).

If there is a selectable object (step S13-1, YES), the process returns to step S9. If not, the process returns to step S10-1 so that the movement of the pointer proceeds.

When the user double-clicks the "select key" (step S10, DOUBLE), the tilt sensor 5 detects the tilt of the body of the mobile terminal (step S10-2). The tilt sensor 5 informs the processor 1 of current data as to the degree of the tilt.

According to the current data reported by the tilt sensor 5 and "reference tilt data" stored in the storage 2, the processor 1 determines the moving direction and speed of the pointer (step S11-2).

Based on the determined moving direction and speed of the pointer, the processor 1 updates the pointer position on the display 4, thereby displaying the pointer at the updated position (step S12-2).

After the pointer is displayed on the screen, the processor 1 determines whether or not there is a selectable object (icon, anchor, etc.) at the updated pointer position (step S13-2).

If there is a selectable object (step S13-2, YES), the process returns to step S9. If not, the process returns to step S10-2 so that the movement of the pointer proceeds.

When detecting the release of the "select key" (step S9, YES), the processor 1 executes an application corresponding to the selectable object, and displays the application on the screen (step S14).

Thereafter, the processor 1 clears the "reference tilt data" stored in the storage 2 (step S15), and removes the pointer from the screen of the display 4 (step S16).

In the embodiment described hereinbefore, when the "select key" is depressed first, the processor 1 obtains data about the degree of the tilt of the mobile terminal from the tilt sensor 5 as "reference tilt data", and calculates the moving position and speed of the pointer based on the data. This operation is essential for an incremental tilt sensor. Meanwhile, an absolute triaxial accelerometer used herein can define the horizontal state of the mobile terminal (the main surface of the terminal is perpendicular to the direction of gravity) as a reference. However, the absolute triaxial accelerometer also needs to perform the above operation if consideration is given to the temperature drift of the accelerometer or the output temperature stability.

After the pointer is displayed on the screen in response to the depression of the "select key", the user may wish to cancel the operation. In such a case, the user has to move the pointer to the position where there is no selectable object (icon, anchor, etc.) on the screen, and release the "select key". However, if the areas where no selectable object exists are few or small, the operability of the mobile terminal is deteriorated.

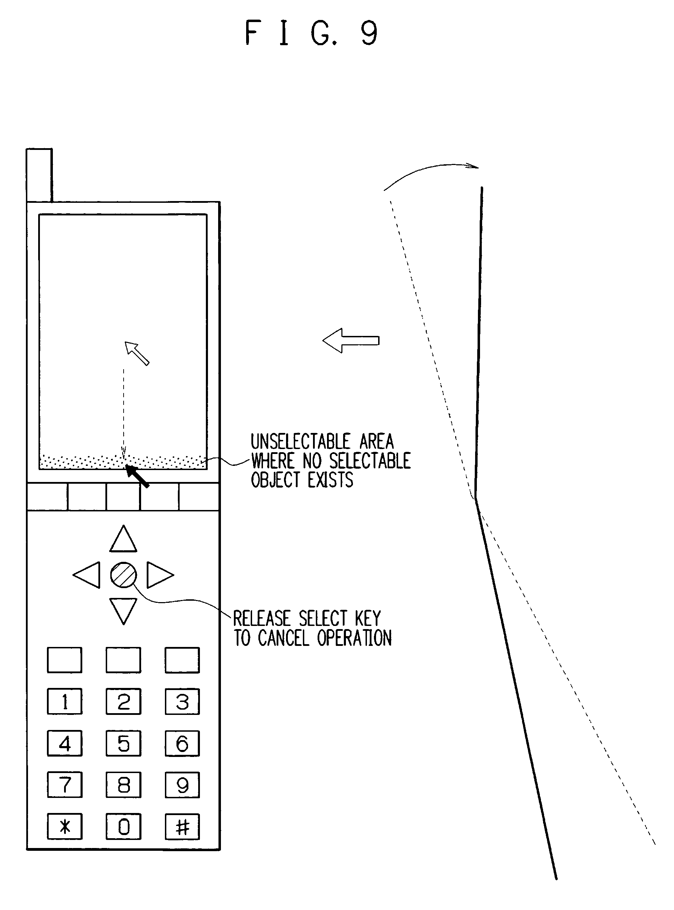

Fig. 9 illustrates the method of solving the problem. In order to ensure the canceling operation, the bottom area of the screen is defined as an unselectable area where no selectable object (icon, anchor, etc.) exists and no function or application can be selected. The user can perform the canceling operation by moving the pointer to the unselectable area and releasing the "select key". By virtue of this construction, even if the user wishes to cancel the operation after depressing the "select key", he/ she is required only to tilt the mobile terminal substantially downward and release the "select key". Thus, the canceling operation is facilitated.

As set forth hereinabove, in accordance with the present invention, the user can manipulate the pointer on the display screen while holding the mobile terminal one-handed. In addition, since the pointer moves according to the degree of the tilt of the mobile terminal, the user can manipulate the pointer of the small mobile terminal without a pointing device as for example a touch panel, a trackball, a trackpoint, and a trackpad. Further, the same operability can be achieved regardless of the shape and size of the mobile terminal.

Although these effects can also be achieved by the conventional technique disclosed in Japanese Patent Application laid open No. 2002-082773, the present invention achieves distinctive effects as follows.

In accordance with the present invention, since the accelerometer is employed instead of the vibration gyro as a tilt sensor, the tilt sensor can be easily mounted in the small and thin body of a mobile terminal. Moreover, the accelerometer is capable of detecting static acceleration as, for example, "static tilt with respect to gravity". Thus, the user can sense the tilt of the mobile terminal quite naturally, which improves the operability of the mobile terminal.

Besides, a variety of pointer movement modes, such as constant speed, speedup and slowdown can be selected, which further improves the operability of the mobile terminal.

Furthermore, various physical phenomena of a moving object such as "friction", "resistance" and "rebound" may be applied to the movement of the pointer. In this case, a number of computer or electronic games can be implemented on the mobile terminal. For example, with a circular pointer like a ball used for a ball game, the mobile terminal enables a ball game in which a player enjoys hitting a ball, such as golf putting, baseball pitching or batting, shooting, or billiards including four-ball billiards, three-cushion billiards and pocket billiards.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

## Claims

1. A mobile terminal comprising:
a tilt sensor for detecting the tilt of the mobile terminal; and
a controller for controlling the moving speed of a pointer on the display screen of the mobile terminal toward the direction of the tilt according to the degree of the tilt.

2. A mobile terminal comprising:
a tilt sensor for detecting the tilt of the mobile terminal; and
a controller for changing the moving speed of a pointer on the display screen of the mobile terminal when the tilt sensor has detected a change in the tilt of the mobile terminal.

3. A mobile terminal comprising:
a tilt sensor for detecting the tilt of the mobile terminal; and
a controller for changing the moving speed or the moving position of a pointer on the display screen of the mobile terminal toward the direction of the tilt when the tilt sensor has detected a change in the tilt of the mobile terminal.

4. The mobile terminal claimed in claim 3, wherein the moving speed or the moving position is calculated based on the output of the tilt sensor corresponding to the tilt from the horizontal.

5. The mobile terminal claimed in claim 3, wherein the moving speed or the moving position is calculated based on the comparison between the output data of the tilt sensor at a predetermined time point as a reference and that when the tilt sensor detects a change in the tilt of the mobile terminal.

6. The mobile terminal claimed in claim 1, wherein the tilt sensor is an absolute tilt sensor.

7. The mobile terminal claimed in claim 2, wherein the tilt sensor is an absolute tilt sensor.

8. The mobile terminal claimed in claim 3, wherein the tilt sensor is an absolute tilt sensor.

9. The mobile terminal claimed in claim 3, wherein the tilt sensor is an incremental tilt sensor.

10. A display control method applied to a mobile terminal comprising the steps of:
detecting the tilt of the mobile terminal; and
controlling the moving speed of a pointer on the display screen of the mobile terminal toward the direction of the tilt according to the degree of the tilt.

11. A display control method applied to a mobile terminal comprising the steps of:
detecting the tilt of the mobile terminal; and
changing the moving speed of a pointer on the display screen of the mobile terminal when a change in the tilt of the mobile terminal has been detected.

12. A display control method applied to a mobile terminal having a display and a tilt sensor, the method comprising the steps of
detecting the tilt of the mobile terminal; and
changing the moving speed or the moving position of a pointer displayed on the screen of the display toward the direction of the tilt when the tilt sensor has detected a change in the tilt of the mobile terminal.

13. The display control method claimed in claim 12 wherein, the moving speed or the moving position is calculated based on the output of the tilt sensor corresponding to the tilt from the horizontal.

14. The display control method claimed in claim 12 wherein, the moving speed or the moving position is calculated based on the comparison between the output data of the tilt sensor at a predetermined time point as a reference and that when the tilt sensor detects a change in the tilt of the mobile terminal.

15. The display control method claimed in claim 12 wherein, the tilt sensor is an absolute tilt sensor.

16. The display control method claimed in claim 12 wherein, the tilt sensor is an incremental tilt sensor.

17. A display control method applied to a mobile terminal having a display and a tilt sensor, the method comprising the steps of:
displaying icons each corresponding to a specific operation including specific application software on the screen of the display;
displaying a pointer on the screen of the display;
changing the moving speed or the moving position of the pointer toward the direction of the tilt when the tilt sensor has detected a change in the tilt of the mobile terminal;
when the pointer has moved to reside on the icon on the screen of the display, activating a specific operation including specific application software corresponding to the icon; and
after the activation, deleting the icons from the screen of the display.

18. The display control method claimed in claim 17, wherein:
the mobile terminal further has input keys;
the pointer is displayed on the screen of the display when a specific key of the input keys is depressed;
the movement of the pointer is controlled while the specific key is being depressed; and
a specific operation including specific application software is activated when the specific key is released.

19. The display control method claimed in claim 17, further comprising the step of displaying a specific area on the edge of the screen of the display, wherein when the pointer has moved to reside on the specific area on the screen of the display, the operation of the mobile terminal performing the display control method is canceled.
